# EUROPÄISCHE PATENTSCHRIFT

(11) **EP 3 764 158 B1**
(45) Veröffentlichungstag und Bekanntmachung des Hinweises auf die Patenterteilung: **30.03.2022**
(21) Anmeldenummer: 20185086.4
(22) Anmeldetag: 09.07.2020
(51) Int. Cl.: G03B 15/02, F21V 7/00

(54) **ZWEIDIMENSIONALES BELEUCHTUNGSSYSTEM**
TWO-DIMENSIONAL ILLUMINATION SYSTEM
SYSTÈME D'ÉCLAIRAGE À DEUX DIMENSIONS

(30) Priorität: 09.07.2019 DE 102019118557
(43) Veröffentlichungstag der Anmeldung: 13.01.2021
(73) Patentinhaber: Chromasens GmbH, 78467 Konstanz (DE)
(72) Erfinder: Jenne, Bernd, 78465 Konstanz (DE); Allweier, Arnold, 78476 Allensbach (DE)
(74) Vertreter: HGF

(56) Entgegenhaltungen:
- EP-B1- 2 796 779
- US-A1- 2012 008 320

## Beschreibung

Die vorliegende Erfindung betrifft ein Beleuchtungssystem zum Ausleuchten eines definierten Beleuchtungsgebietes, beispielsweise eines Kamerasichtfeldes.

Für eine Vielzahl von Anwendungen ist eine geeignete Ausleuchtung eines Beleuchtungsgebietes erforderlich. Manuelle und vor allem auch kameragestützte Beobachtungen erfordern eine definierte Beleuchtung des jeweiligen Beobachtungsgebietes, um reproduzierbare Ergebnisse liefern zu können. Die Beleuchtung ist entscheidend für gute Ergebnisse.

Als besonderes Anwendungsfeld werden hier Inspektionsanwendungen von Straßen diskutiert. Dabei wird mittels einer oder mehrerer Kameras die Straßenoberfläche typischerweise von einem fahrenden Fahrzeug aus untersucht. Für eine hohe Bildqualität ist eine definierte Ausleuchtung des Beobachtungsgebietes der Kamera, mithin des Beleuchtungsgebiets wichtig. Aber auch bei anderen Anwendungen beispielsweise im Bereich der Materialprüfung oder bei Produktionsstraßen sind Optimierungen der Ausleuchtung von Interesse.

Mit Hilfe einer gezielten Ausleuchtung des Beleuchtungsgebietes lässt sich das Kamerabild optimieren. Einerseits kann eine möglichst homogene Ausleuchtung gewünscht sein. Andererseits kann auch eine gezielt inhomogene Beleuchtung einzelner Bereiche des Beleuchtungsgebietes für eine Verbesserung des Bildes sorgen. Beispielsweise kann eine Verstärkung der Ausleuchtung einzelner Bereiche, wie insbesondere der Ränder, Defizite der Kameratechnik kompensieren, wie beispielsweise Objektivrandabfall oder ähnliches.

Bei bekannten Systemen zur Ausleuchtung eines Beleuchtungsgebietes ist ein Reflektor vorgesehen, der bei einer linearen Anordnung von Lichtquelle eine lineare Fokussierung in einer Raumrichtung ermöglicht. Hierzu ist insbesondere ein sogenannter Rinnenreflektor vorgesehen. Dieser fokussiert das Licht in einer Richtung auf eine Linie. Aufgrund von Abbildungsfehlern eines aufnehmenden Kamerasystems kommt es zu schlechten Bildqualität durch eine inhomogene Lichtverteilung auf dem Kamerachip.

Die US 7,556,399 B1 offenbart eine Anordnung von gegenüberliegenden Lichtreflektoren, um direktes und indirektes Licht gleichzeitig zu erzeugen. In einem Ausführungsbeispiel ist eine Leuchtröhre unterhalb einer Reihe von transversen Parabolreflektoren angeordnet, die wiederum in dem S-förmigen Gehäuse angeordnet sind.

Aus der US 9,115,867 B2 geht ein dualer Reflektor hervor. Eine lineare Lampe ist von einem gekrümmten Reflektor 68 mit Parabolspiegeln angeordnet. Diese erste Reflektoranordnung ist wiederum unterhalb eines zweiten senkrecht dazu stehenden Reflektors angeordnet. Der erste Reflektor fängt dabei das Licht der Lampe welches nicht auf den zweiten Reflektor auftreffen würde auf und lenkt das Licht auf jenen zweiten Reflektor.

Aus der DE 2,732,419 C2 geht eine Antenne mit zwei Reflektoren hervor, wobei die Reflektoren die Form von Flächen eines parabolischen Zylinders haben und deren Symmetrieebenen senkrecht aufeinander stehen. Die Aufgabe der Antenne liegt darin, bei kleinen räumlichen Abmessungen eine störungsfreie, ebene Wellenfront der abgegebenen Strahlung zu erzeugen.

Die US 2,305,722 offenbart eine Lampenhalterung von langen Leuchtröhren. Die Leuchtröhren sind unter einem gekrümmten Reflektor angeordnet. Unter den Leuchtröhren sind in Längsrichtung Platten angeordnet, die justiert werden können.

Aus der US 2002/0003699 A1 geht eine Beleuchtungsvorrichtung hervor, die eine asymmetrische Beleuchtung ermöglicht. Eine längliche Lichtquelle ist von einem Reflektor abgeschirmt, welcher das Licht nach draußen lenkt. Das nach draußen gehende Licht wird durch senkrecht angeordnete Platten unterteilt, wobei die Platten sowohl gerade als auch eine Kontur aufweisen können.

Die DE 10 2014 102 686 A1 zeigt einen Diffusor für eine Leuchte mit in Längsrichtung entlang der Leuchte verlaufenden Seitenreflektoren sowie in Querrichtung erstreckenden Querreflektoren. Die Querreflektoren sind in Längsrichtung zueinander beabstandet angeordnet.

Aus der DE 196 12 197 A1 geht eine Leuchte mit einem kastenförmigen Gehäuse 2 hervor, das eine Gehäuseöffnung für den Lichtaustritt aufweist. Ein Längsreflektor ist in Form eines konkav und gegebenenfalls auch konvex gekrümmten, sich in der Längsrichtung der Leuchte erstreckenden Profils ausgebildet. Mehrere, jeweils in einem längsgerichteten Abstand voneinander angeordnete Querreflektoren sind mit den Seitenwänden des Längsreflektor verbunden. Die Leuchte weist eine sich in Längsrichtung erstreckende Lichtquelle, wie zum Beispiel eine Leuchtstoffröhre auf.

Die US 2012/008320 A1 beschreibt eine Lichtumlenkungsabschirmung für eine LED-Leuchte, bei dem ein Umlenkungsschirm mehrere LEDs einer Reihe umlenkt. Es sind mehrere Reihen mit mehreren Schirmen vorgesehen.

In der US 7,556,399 B1 ist eine Leuchte mit einem im Querschnitt etwa S-förmigen Reflektorkörper gezeigt, der einen ersten gebogenen Abschnitt und einen zweiten gebogenen Abschnitt aufweist. Im jeweiligen Innenbereich der gebogenen Abschnitte befinden sich langgestreckte Leuchtmittel. An den Öffnungen dieser gebogenen Abschnitte sind in Querrichtung verlaufende parabolische Reflektoren angeordnet, welche das Licht in Längsrichtung verteilen.

Die DE 40 24 738 C2 offenbart eine indirekte Spiegelleuchte mit einer langgestreckten Lichtquelle, mehreren in Querrichtung zur Lichtquelle angeordneten Längsreflektoren und einen sich in Längsrichtung zur Lichtquelle erstreckenden Querreflektor.

Aus der EP 2 796 779 B1 geht eine Leuchte hervor, bei welcher mehrere Leuchtdioden auf einer Grundplatte angeordnet sind, wobei zwischen einzelnen Leuchtdioden in Querrichtung verlaufende Reflektoren vorgesehen sind.

Der Erfindung liegt daher die Aufgabe zugrunde, die beschriebenen Nachteile zu überwinden und das bekannte Beleuchtungssystem zu verbessern. Insbesondere ist ein Ziel, die Verteilung des Lichts anzupassen. Beispielsweise kann die Ausleuchtung als solches, wie auch deren Homogenität beziehungsweise Inhomogenität wie auch die Begrenzung auf einen gewünschten Bereich angepasst werden.

Die Aufgabe wird durch die Gegenstände der unabhängigen Patentansprüche gelöst. Vorteilhafte Ausgestaltungen sind in den jeweiligen Unteransprüchen angegeben.

Ein derartiges Beleuchtungssystem ist zum Ausleuchten eines definierten Beleuchtungsgebietes vorgesehen. Bei dem Beleuchtungsgebiet kann es sich beispielsweise um ein Beobachtungsgebiet oder auch ein Kamerasichtfeld handeln. Die Lichtquelle ist vorzugsweise langgestreckt. Langgestreckt bedeutet in diesem Fall, dass die Lichtquelle entlang einer Längsrichtung länger ist als entlang einer Querrichtung. Die Längsrichtung ist mindestens doppelt, vorzugsweise mindestens etwa fünfmal, in der Praxis auch durchaus zehnmal, zwanzigmal oder mehrere Größenordnungen so lang wie die Querrichtung. Vorzugsweise ist die Lichtquelle aber aus einer Vielzahl Punktlichtquellen, insbesondere Leuchtdioden (LED), zusammengesetzt. Eine langgestreckte Ausbildung der Lichtquelle kann insbesondere bei Verwendung einer Zeilenkamera als Kamerasystem Vorteile bieten. Es ist wenigstens ein Querreflektor zum Reflektieren des Lichts der Lichtquelle quer beziehungsweise senkrecht zur Längsrichtung der Lichtquelle zum Ausleuchten des Beleuchtungsgebietes vorgesehen. Der Querreflektor erstreckt sich dabei entlang der Lichtquelle. Zum Einstellen der Lichtintensität in Längsrichtung der Lichtquelle sind mehrere in Längsrichtung verteilte Längsreflektoren angeordnet. Diese dienen dazu, das Licht in Längsrichtung abzulenken. Die Lichtquelle zeichnet sich dadurch aus, dass zumindest einige der Längsreflektoren derart individuell einstellbar angeordnet sind, dass die Lichtintensität in Längsrichtung verändert werden kann.

Dieses Verstellen kann bspw. durch Schwenken und/oder Verschieben der Längsreflektoren ausgeführt werden.

Bevorzugt sind die Längsreflektoren und der wenigstens eine Querreflektor in zum Beleuchtungsgebiet weisender Richtung hintereinander angeordnet sind. Dies ist in Richtung der Lichtausbreitung zu sehen. Mit anderen Worten wird das Licht zunächst von den Längsreflektoren und dann vom Querreflektor reflektiert, oder gegebenenfalls auch in umgekehrter Reihenfolge. Bevorzugt ist damit ein mehrstufiges, vorzugsweise zweistufiges Reflektorsystem vorgesehen. Weiter bevorzugt ist jeder der Stufen des Reflektorsystems eine Raumrichtung zugeordnet. Vorzugsweise ist damit für jede der Raumrichtungen eine separate Reflektorstufe vorgesehen. Eine Mehrstufigkeit sorgt dafür, dass eine unabhängige Reflexion für jede Raumrichtung erfolgt. Somit kann das Beleuchtungsgebiet gezielt ausgeleuchtet werden.

Vorzugsweise verlaufen die Längsreflektoren zumindest in etwa quer beziehungsweise senkrecht zur Längsrichtung. Dies bedeutet, dass die Längsreflektoren in einer anderen Raumrichtung arbeiten als die Querreflektoren. Zur Reflexion in zueinander senkrechten Raumrichtungen, vorzugsweise in Längsrichtung und in Querrichtung, sind dementsprechend insbesondere unterschiedliche Reflektoren vorgesehen. Weiter vorzugsweise handelt es sich um die Längsreflektor und den wenigstens einen Querreflektor. Mit anderen Worten lassen die unterschiedlichen Reflektoren auch für die jeweiligen Raumrichtungen optimieren. Insbesondere handelt es sich um ein zweidimensionales Beleuchtungssystem.

Die Längsreflektoren sind vorzugsweise schwenkbar und/oder verschiebbar in Längsrichtung der Lichtquelle gelagert. So kann durch Schwenken oder Verschieben der Längsreflektoren die Lichtintensität in Längsrichtung verändert werden beziehungsweise deren Verteilung. Mit anderen Worten kann auf diese Weise die lokale Lichtintensität modifiziert werden. Dies bietet den Vorteil einer Einstellbarkeit der Lichtverteilung. Das Verschwenken vollzieht sich insbesondere entlang einer Achse in Längsrichtung der Längsreflektoren. Die Längsreflektoren lassen sich weiter bevorzugt automatisch und/oder motorisch einstellen, insbesondere elektromotorisch. Eine elektronische und/oder computergestütze Steuerung der Einstellung kann erhebliche Vorteile bieten. Alternativ oder zusätzlich kann aber auch eine manuelle Einstellung vorgesehen sein. Vorzugsweise kann auch eine dynamische Einstellung der Ausrichtung der Längsreflektoren möglich sein, beispielsweise zur Kompensation zeitlich veränderlicher Ausleuchtungen, Reflexionseigenschaften oder ähnlichem.

Vorzugsweise reflektiert zunächst der wenigstens eine Längsreflektor und danach der wenigstens eine Querreflektor das Licht. Somit kann zunächst die Lichtverteilung in Längsrichtung angepasst werden, nämlich insbesondere mit dem einen oder wenigstens einen Längsreflektor. Vorzugsweise wird dann erst danach die Lichtverteilung in Querrichtung angepasst, nämlich insbesondere mit dem einen oder wenigstens einen Querreflektor.

Zur Ausleuchtung in Längsrichtung ist bevorzugt eine Vielzahl Längsreflektoren vorgesehen. So lässt sich das Licht einer Lichtquelle abschnittsweise mit jeweils einzelnen Längsreflektoren reflektieren. Vorzugsweise handelt es sich zumindest teilweise oder vollständig um identische Längsreflektoren. Damit kann durch die Vielzahl an Reflektoren eine gleichmäßige Lichtreflexion erreicht werden. Damit kann die Lichtverteilung bereichsweise angepasst werden.

Die Längsreflektoren sind zur gezielten Ausleuchtung des Beleuchtungsgebietes in Querrichtung ausgerichtet. Diese Ausrichtung kann rechtwinklig zur Längsrichtung sein oder auch unter einem anderen Winkel dazu, insbesondere einem nahezu Winkel.

Vorzugsweise sind die Längsreflektoren zur homogenen oder inhomogenen Ausleuchtung des Beleuchtungsgebietes in Längsrichtung ausgerichtet. Weiter vorzugsweise sind diese in Längsrichtung verteilt. Insbesondere sind die Längsreflektoren mit gleichen Abständen verteilt angeordnet. Auf diese Weise lässt sich die Lichtverteilung gezielt und/oder feinteilig anpassen.

Mittels der Längsreflektoren kann vorzugsweise eine verstärkte oder reduzierte Ausleuchtung in Bereichen des Beleuchtungsgebietes vorgesehen werden. Es lässt sich also in einzelnen Bereichen die Ausleuchtung verstärken oder abschwächen. Somit kann die Ausleuchtung an die Aufnahmetechnik, insbesondere die Kameratechnik, angepasst werden.

Das Beleuchtungssystem sorgt für eine verstärkte oder reduzierte Ausleuchtung des Randbereiches des Beleuchtungsgebietes. Insbesondere kann diese als Randüberhöhung, vorzugsweise des Randbereiches an den Querseiten und/oder Längsseiten, vorgesehen sein. Damit lassen sich Defizite der Beobachtungstechnik, wie insbesondere der Kameratechnik ausgleichen. Beispielsweise können zentrale Überbelichtungen oder randseitige schlechte Abbildungsqualitäten kompensiert werden.

Bevorzugt sind die Längsreflektoren lediglich in Teilbereichen der Längserstreckung der Lichtquelle angeordnet. Insbesondere dient dies zur abschnittsweisen Ausleuchtung des Beleuchtungsgebietes. Damit kann eine abschnittsweise unterschiedliche Ausleuchtung erreicht werden.

Vorzugsweise wird die Lichtquelle durch eine Vielzahl von Punktlichtquellen gebildet. Jedem der Längsreflektoren ist vorzugsweise eine Punktlichtquelle, insbesondere eine Leuchtdiode, zugeordnet. Damit ist umgekehrt jeder Punktlichtquelle ein Reflektor zugeordnet. So kann das Licht jeder Punktlichtquelle gezielt umgelenkt werden.

Der Längsreflektor und/oder der Querreflektor sind insbesondere als Linienreflektoren ausgebildet. Damit kann eine Fokussierung des Lichtes auf einen linienförmigen Bereich erreicht werden.

Der wenigstens eine Querreflektor und/oder Längsreflektor ist rinnenförmig. Vorzugsweise ist er ein Rinnenreflektor. Besonders bevorzugt ist er als Parabolrinne ausgebildet. Ein solcher Reflektor sorgt für eine Reflexion in einen oder Fokussierung des Lichtes auf einen definierten, insbesondere streifenförmigen Bereich.

Bevorzugt ist der wenigstens einen Längsreflektor als ebener Reflektor oder als Rinnenreflektor ausgebildet. Damit wird eine Reflektion des Lichtes auf einen linienförmigen oder streifenförmigen Bereich erreicht. Dies ermöglicht eine gezielte Ausleuchtung eines streifenförmigen Bereichs.

Im Ergebnis handelt es sich damit mit dem erfindungsgemäßen System vorzugsweise um ein zweidimensionales Beleuchtungssystem. Die zwei Dimensionen beziehen sich dabei darauf, dass die jeweilige Lichtreflexion in einer Raumrichtung beziehungsweise Dimension unabhängig von der jeweils anderen Raumrichtung beziehungsweise Dimension erfolgen kann. Dafür sorgt insbesondere die Verwendung unabhängiger Reflektoren.

Ein bevorzugtes Ausführungsbeispiel der Erfindung wird im Folgenden anhand der Figuren der Zeichnung näher beschrieben. In dieser zeigen die:
- Fig.1: ein erfindungsgemäßes Beleuchtungssystem,
- Fig. 2: eine perspektivische Detailansicht eines Beleuchtungssystems,
- Fig. 3: eine Frontalansicht des Beleuchtungssystems der Fig. 2,
- Fig. 4: ein Detailausschnitt X der Fig. 3, und

- Fig. 5: eine Seitenansicht des Beleuchtungssystems der Fig. 2.

Das hier beschriebene erfindungsgemäße Ausführungsbeispiel der Erfindung zeigt ein Beleuchtungssystem 10 zur Ausleuchtung eines Kamerasichtfeldes als Beleuchtungsgebiet 11. Konkret kann das beschriebene Beleuchtungssystem 10 dazu dienen, beispielsweise bei der Inspektion von Fahrbahnen oder aber auch bahnförmigen Materialien eingesetzt zu werden.

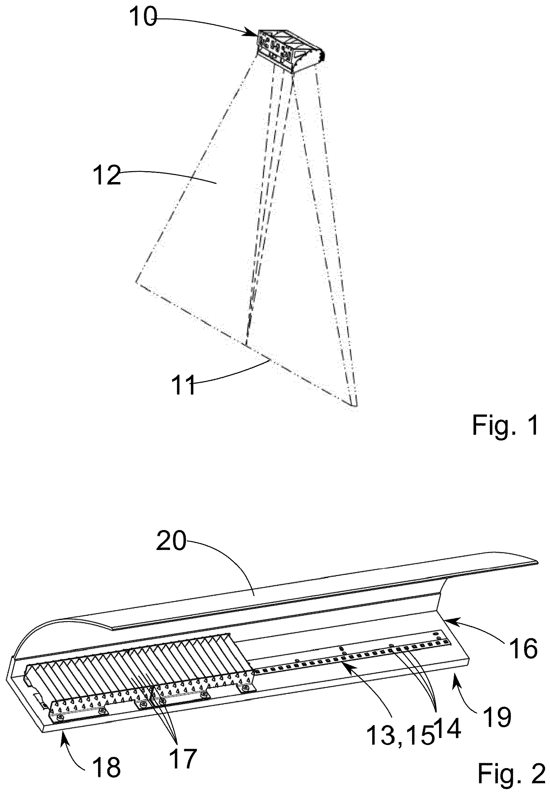

Das beschriebene Beleuchtungssystem 10 beleuchtet dabei ein Beleuchtungsgebiet 11 (Fig. 1). Entsprechende Lichtstrahlung 12 wird dabei vom Beleuchtungssystem 10 derart gerichtet ausgesendet, dass das gewünschte Beobachtungsgebiet 11 in der gewünschten Weise ausgeleuchtet werden kann.

Im gezeigten Beispiel handelt es sich dabei um ein im Wesentlichen rechteckiges Beobachtungsgebiet 11. Dieses Beobachtungsgebiet 11 kann dann zum Beispiel ein Teil einer Stra-ßenoberfläche oder eines bahnförmigen Materials sein, das dann mittels einer nicht gezeigten Kamera erfasst werden kann.

Das Beleuchtungssystem 10 dient dabei in der Regel zumindest dazu, eine definierte Ausleuchtung des Beobachtungsgebiets 11 sicherzustellen.

Dabei kann beispielsweise eine möglichst homogene Ausleuchtung gewünscht sein. Auf diese Weise wird erreicht, dass wenige Korrekturen bei der Bildauswertung erforderlich sind. Auch lassen sich damit Parameter, wie Dynamikbereich und Rauschabstand, der verwendeten Kameratechnik berücksichtigen und gegebenenfalls optimieren.

Je nach Kamerasystem oder Aufnahmetechnik kann aber auch eine inhomogene Ausleuchtung gewünscht sein. So kann eine Hervorhebung einzelner Bereiche des Beobachtungsgebiets 11 durch stärkere oder auch schwächere Ausleuchtung erfolgen. Beispielsweise lassen sich damit Unterschiede bei der Bilderfassung in Randbereichen ausgleichen. Diese können zum Beispiel auf durch Abbildungsfehler durch die jeweilige Optik auf einen Kamerachip hervorgerufen werden. Umgekehrt kann folglich eine gezielte Anpassung der Ausleuchtung an die verwendete Aufnahmetechnik negative Einflüsse auf die Bildqualität reduzieren. So lassen sich gegebenenfalls spezielle Eigenschaften der verwendeten Kameratechnik, wie Dynamikbereich und Rauschabstand, aber auch Verzerrungen und Abbildungsfehler, gezielt in einzelnen Bereichen des Beobachtungsgebiets 11 optimieren, reduzieren oder auch kompensieren.

Als besonderer Anwendungsfall können die sogenannten Zeilenkameras angesehen werden. Als Zeilenkamera bezeichnet man typischerweise Kameras, die lediglich eine einzelne Zeile lichtempfindlicher Sensoren aufweist, oder allenfalls wenige Zeilen. Die im Folgenden geschilderten Vorteile offenbaren sich bei Zeilenkameras in besonderer Weise, können naturgemäß aber auch bei zweidimensionalen Kameratypen entsprechende vorteilhafte Wirkungen zeigen.

Bei einer Verwendung einer sogenannten Zeilenkamera kann eine möglichst homogene Ausleuchtung des Beobachtungsgebiets 11 besondere Vorteile bieten. Auf diese Weise lässt sich der Dynamikbereich jedes Pixels beziehungsweise Einzelsensors der Kamera während der Bewegung entlang des Beobachtungsgebiets 11 gezielt und optimal ausnutzen.

Aber auch eine gezielte Inhomogenität der Ausleuchtung, beispielsweise an der Rändern des Beobachtungsgebiets 11, kann besondere Vorteile bieten. So lässt sich zum Beispiel mittels einer Randüberhöhung der Ausleuchtung, also einer stärkeren Ausleuchtung zum Rand hin, ein abnehmender Reflexionsgrad in Richtung einer zentral angeordneten Kamera bzw. eine verminderte Transmission am Randbereich eines Objektivs ausgleichen. Typischerweise nimmt nämlich naturgemäß die Lichtmenge, je weiter man sich den Rändern des Beobachtungsgebietes 11 nähert, ab. Dies kann dann durch eine randseitig verstärkte Ausleuchtung kompensiert werden, so dass im Idealfall dennoch ein homogenes Beobachtungsgebiet 11 eine gleichmäßige Ausleuchtung der Kamera erzielt und damit eine gleichmäßig ausgeleuchtete Abbildung und Ausnutzung des Dynamikumfangs.

Erfindungsgemäß wird eine gezielte Ausleuchtung des Beobachtungsgebiets 11 durch spezielle Anordnung von Komponenten erreicht.

Zur Aussendung des benötigten Lichts dient dabei zunächst eine Lichtquelle 14, bei der es sich um eine langgestreckte Lichtquelle 13 handelt (Fig. 2). Eine langgestreckte Lichtquelle 13 zeichnet sich insbesondere dadurch aus, dass die Abmessungen in Längsrichtung deutlich größer sind als in Querrichtung.

Diese Lichtquelle 13 wird dabei im vorliegenden Fall aus einer Vielzahl einzelner Punktlichtquellen zusammengesetzt, nämlich Leuchtdioden 14. Die Leuchtdioden 14 sind dabei als Punktlichtquellen anzusehen, auch wenn sie naturgemäß eine gewisse kleine Fläche aufweisen. Im Verhältnis zu den Gesamtabmessungen der langgestreckten Lichtquelle 13 sind die Leuchtdioden 14 jedoch klein und damit tatsächlich nahezu punktförmig und so als Punktlichtquellen zu qualifizieren.

Die Leuchtdioden 14 sind typischerweise in zumindest einer Reihe nebeneinander angeordnet, also reihenförmig. Der Abstand zwischen zwei Leuchtdioden 14 ist typischerweise jeweils gleich. Gegebenenfalls können aber auch mehrere Leuchtdioden 14 unmittelbar nebeneinander wie auch in mehreren parallelen Reihen angeordnet sein. Bei diesen kann es sich zum Beispiel um sogenannte Leuchtdiodenstreifen 15 handeln, also länglichen flexiblen oder auch starren Streifen, die in regelmäßigen Abständen mit Leuchtdioden 14 und elektrischen Leitern zu deren Stromversorgung versehen sind.

Die Lichtquelle 13, im vorliegenden Fall gebildet aus einer Vielzahl Leuchtdioden 14, ist in einem Gehäuse 16 angeordnet. Es handelt sich bei der Lichtquelle 13 um einen Leuchtdiodenstreifen 15. Das Licht der Lichtquelle 13 beziehungsweise der Leuchtdioden 14 wird dabei mittels Reflektoren auf das Beobachtungsgebiet 11 reflektiert, also umgelenkt.

Oberhalb der Lichtquelle 13 ist hier in einem Teilbereich derselben eine Vielzahl von Längsreflektoren 17 angeordnet. Im gezeigten Beispiel ist jeder Leuchtdiode 14 genau ein derartiger Reflektor 17 zugeordnet. Damit wird das Licht jeder einzelnen Leuchtdiode 14 jeweils gezielt reflektiert beziehungsweise umgelenkt.

Es handelt sich bei den Reflektoren jeweils um Spiegel. Die Längsreflektoren 17 sind dabei als leicht gekrümmte Spiegel ausgebildet. Damit kann das Licht gezielt reflektiert werden. Hier dienen die Längsreflektoren 17 dazu, das Licht im Randbereich des Beleuchtungssystems 10, hier linken Randbereich 18, zu verstärken. Prinzipiell kann auch der gegenüberliegende Randbereich 19 je nach Einsatzzweck des Beleuchtungssystems 10 ebenfalls oder alternativ mit entsprechenden Reflektoren versehen sein, nämlich insbesondere mit weiteren Längsreflektoren 17.

Im vorliegenden Fall dient außerdem ein weiterer Reflektor, nämlich ein Querreflektor 20, dazu, das Licht senkrecht beziehungsweise quer zur Längserstreckung der Lichtquelle 13 zu reflektieren. Hier ist ein einzelner Querreflektor 20 vorgesehen. Alternativ können auch mehrere oder sogar eine Vielzahl von Querreflektoren 20 vorgesehen sein. Der wenigstens eine Querreflektor 20 dient dazu, das Licht auf einen streifenförmigen Bereich zu reflektieren, nämlich gegebenenfalls entsprechend in einen kleinen Raumbereich zu fokussieren.

Der Querreflektor 20 dient damit dazu, das von den Längsreflektoren 17 bereits gezielt reflektierte Licht in einer weiteren Richtung zu reflektieren, nämlich insbesondere in einer weiteren Raumrichtung. Die Längsreflektoren 17 sind dazu im Wesentlichen senkrecht zum einen oder wenigstens einen Querreflektor 20 ausgerichtet.

Bei dem Querreflektor 20 handelt es sich um einen rinnenförmigen Reflektor oder Rinnenreflektor. Diese zeichnet sich dadurch aus, dass das einfallende Licht in einen kleinen länglichen Raumbereich beziehungsweise Flächenbereich, idealerweise einen Streifen oder sogar einen dünnen Strich, reflektiert wird. Dieser Raumbereich beziehungsweise Flächenbereich ist dabei vorzugsweise gerade das Beleuchtungsgebiet 11.

Auf diese Weise kann eine Ausleuchtung eines relativ eng begrenzten Gebietes 11 erreicht werden. Konkret kann auch eine scharfe Begrenzung des Beleuchtungsgebietes 11 erreicht werden, indem nämlich die Reflexion auf einen relativ kleinen Bereich begrenzt wird. Es kommt zu einer deutlichen Fokussierung des Lichts auf einen streifenförmigen Bereich oder einen Streifen.

Durch die unmittelbar im Vorfeld bereits erfolgte Reflexion in Längsrichtung durch die Längsreflektoren 17 wird damit eine Lichtverteilung in einer Raumrichtung bereits vorgegeben. Diese Lichtverteilung durch die Längsreflektoren 17 in Längsrichtung wird dann mittels des wenigstens einen Querreflektors 20 in den streifenförmigen Bereich abgestrahlt.

Prinzipiell kann jeder der Längsreflektoren 17 grundsätzlich so montiert sein, dass eine unabhängige Einstellung von den übrigen Längsreflektoren 17 möglich ist. Auf diese Weise ist grundsätzlich eine feinteilige Einstellung der Ausleuchtung des Beleuchtungsgebietes 11 möglich.

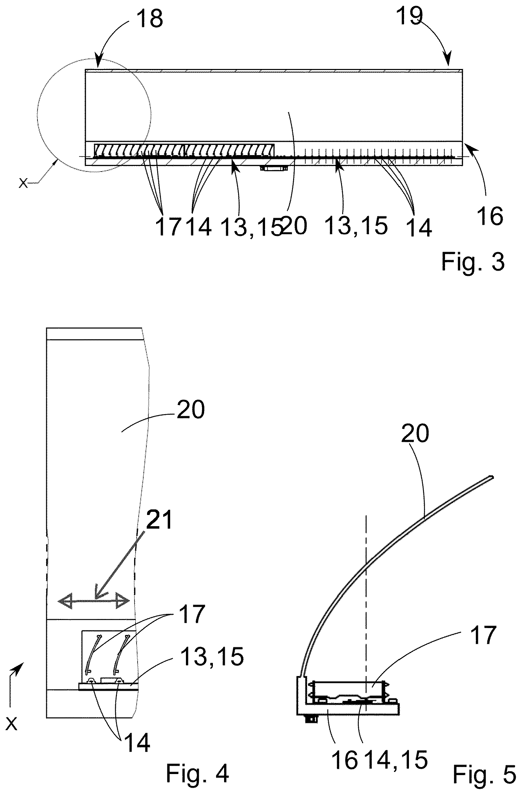

Im Regelfall werden die Längsreflektoren 17 aber im Wesentlichen für eine zumindest nahezu identische Reflexion ausgerichtet sein. Zumindest ein Teil oder alle der Längsreflektoren sind individuell einstellbar. Das Einstellen kann durch Schwenken der Längsreflektoren um eine Achse, welche quer zur Längsrichtung der Lichtquelle verläuft oder durch Verschieben in Längsrichtung der Lichtquelle (siehe Doppelpfeil 21 in Fig. 4) erfolgen. In einer besonderen Ausführung ist dabei zumindest ein Teil oder sind alle der Längsreflektoren 17 identisch (Fig. 2, 3, 4, 5).

Im Ergebnis können damit verschiedene Ziele erreicht werden. Somit kann beispielsweise im Idealfall eine Gleichverteilung der Beleuchtung über den gesamten Bereich des Beleuchtungsgebiets 11 eingestellt werden. Alternativ kann beispielsweise auch eine gezielte Randüberhöhung bei der Lichtverteilung erreicht werden. Mit anderen Worten wird im Randbereich eine stärkere Ausleuchtung des Beobachtungsgebietes 11 vorgenommen. Dies kann dann beispielsweise zu einer Kompensation von Defiziten bei der Bildaufnahme dienen. Beispielsweise können damit Defizite, wie eine schwächere Abbildungsleistung des Kamerasystems oder auch eine schlechtere Reflexion in einzelnen Bereichen der beobachteten Oberfläche ausgeglichen werden. Beispielsweise kann auch ein unterschiedlicher Reflexionsgrad unter verschiedenen Winkeln in Richtung des Beobachtungssystems beziehungsweise der Kamera auf diese Weise kompensiert werden.

Im Ergebnis soll damit erreicht werden, dass idealerweise im gesamten Beobachtungsgebiet 11 eine möglichst optimale Bildqualität erreicht wird. Dies kann durch Ausnutzung optimaler Arbeitsbereiche des Kamerasystems sichergestellt werden. Insbesondere können Parameter, wie eine hohe Empfindlichkeit oder ein geringes Bildrauschen ausgenutzt werden, um die Bildqualität zu optimieren.

Aufgrund der gezielten Steuerung der Reflexion des Lichtes in den zwei Raumrichtungen oder Dimensionen wird hier auch von einem zweidimensionalen Beleuchtungssystem 10 gesprochen.

Im konkreten Einsatz kann dann wenigstens ein derartiges Beleuchtungssystem 10 entsprechend vorgesehen sein, um eine entsprechend gewünschte Ausleuchtung eines Beleuchtungsgebiets 11 zu ermöglichen.

Für eine Fahrbahninspektion von einem hier nicht gezeigten Inspektionsfahrzeug aus können beispielsweise zwei oder auch mehr derartiger Beleuchtungssysteme 10 vorgesehen sein. Diese dienen zur entsprechenden Ausleuchtung der Fahrbahnoberfläche als Beobachtungsgebiet 11. Wenigstens eine Kamera dient dann zur Bildaufnahme von Bildern des entsprechend möglichst optimal ausgeleuchteten Beobachtungsgebiets 11. Dabei können die angesprochenen Optimierungen, wie beispielsweise gezielte Randüberhöhungen der Beleuchtung, dazu dienen, die Bildqualität zu optimieren.

Das Inspektionsfahrzeug fährt dann mit den beschriebenen Komponenten ausgerüstet die Straße entlang, um während der Fahrt Bilder der Fahrbahnoberfläche aufzunehmen. So wird beispielsweise eine Kartierung des Zustands der Straßenoberfläche ermöglicht. Insbesondere können auf diese Weise Reparaturbedarfe, Reinigungserfordernisse oder ähnliches erkannt werden.

Bei einer Beobachtung und Inspektion bahnförmiger Materialien kann dann statt einer Bewegung eines Fahrzeugs über die Fahrbahn hinweg das Material bewegt werden. Konkret wird dann das bahnförmige Material unter einem oder mehreren Beleuchtungssystem 10 mit wenigstens einer Kamera entlang bewegt. Während dessen erfolgt dann eine Bildaufnahme. Damit können sowohl Qualitätsuntersuchungen als auch Fehlerermittlungen auf optischem Wege durchgeführt werden.

Die Bildaufnahme erfolgt bei den jeweiligen Einsatzzwecken idealerweise jeweils kontinuierlich oder zumindest quasi-kontinuierlich. Eine entsprechende digitale Bildverarbeitung schließt sich dabei typischerweise unmittelbar an. Diese erfolgt optimalerweise zumindest nahezu in Echtzeit. Auf diese Weise kann eine schnelle Reaktion auf Fehlerzustände oder ähnliches im Bereich der beobachteten Bahn, also der Fahrbahn oder des Bahnmaterials, erfolgen. Im Übrigen kann auch eine Positionserfassung und Speicherung aller Daten eine nachträgliche Auswertung der aufgenommenen Bilddaten ermöglichen.

Vorzugsweise wird in einem solchen Fall eine Zeilenkamera eingesetzt. Diese kann während der Bewegung mit sehr schneller Bildfolge die gesamte Breite des Beobachtungsgebiets 11 erfassen. Aufgrund der fahrenden Bewegung entlang des Beobachtungsgebiets 11 kann aus diesen Zeilenbildern ein fortlaufendes Bild des Beobachtungsgebiets 11 zusammengesetzt werden.

### Bezugszeichenliste

- 10: Beleuchtungssystem
- 11: Beleuchtungsgebiet
- 12: Lichtstrahlung
- 13: Lichtquelle
- 14: Leuchtdiode
- 15: Leuchtdiodenstreifen
- 16: Gehäuse
- 17: Längsreflektor
- 18: Randbereich
- 19: Randbereich
- 20: Querreflektor
- 21: Doppelpfeil

## Patentansprüche

1. Beleuchtungssystem zum Ausleuchten eines definierten Beleuchtungsgebietes (11), insbesondere eines Beobachtungsgebiets oder eines Kamerasichtfeldes, mit einer langgestreckten Lichtquelle (13), wobei die Lichtquelle (13) vorzugsweise aus einer Vielzahl Punktlichtquellen, insbesondere Leuchtdioden (14), zusammengesetzt ist, wobei wenigstens ein Querreflektor (20) zum Bündeln des Lichts der Lichtquelle (13) quer zur Längsrichtung der Lichtquelle zum Ausleuchten des Beleuchtungsgebietes (11) vorgesehen ist, wobei sich der Querreflektor entlang der Lichtquelle (13) erstreckt, wobei zum Einstellen der Lichtintensität in Längsrichtung der Lichtquelle mehrere in Längsrichtung verteilte Längsreflektoren (17) angeordnet sind, so dass sie das Licht in Längsrichtung ablenken, **dadurch gekennzeichnet, dass** zumindest einige der Längsreflektoren derart individuell einstellbar angeordnet sind, dass die Lichtintensität in Längsrichtung verändert werden kann.

2. Beleuchtungssystem nach Anspruch 1, **dadurch gekennzeichnet, dass** die Längsreflektoren (17) und der Querreflektor (20) in zum Beleuchtungsgebiet (11) weisender Richtung hintereinander angeordnet sind.

3. Beleuchtungssystem nach Anspruch 1 oder 2, **dadurch gekennzeichnet, dass** die Längsreflektoren (17) etwa quer zur Längsrichtung verlaufen.

4. Beleuchtungssystem nach einem der vorhergehenden Ansprüche, **dadurch gekennzeichnet, dass** die Längsreflektoren entweder schwenkbar und/oder in Längsrichtung der Lichtquelle verschieblich gelagert sind, so dass durch Schwenken und/oder Verschieben der Längsreflektoren die Lichtintensität in Längsrichtung verändert werden kann.

5. Beleuchtungssystem nach einem der vorhergehenden Ansprüche, **dadurch gekennzeichnet, dass** zunächst der wenigstens eine Längsreflektor (17) und danach der wenigstens eine Querreflektor (20) das Licht reflektiert.

6. Beleuchtungssystem nach einem der vorhergehenden Ansprüche, **dadurch gekennzeichnet, dass** zur Ausleuchtung in Längsrichtung eine Vielzahl Längsreflektoren (17) vorgesehen sind, weiter vorzugsweise zumindest teilweise oder vollständig identischer Längsreflektoren (17).

7. Beleuchtungssystem nach einem der vorhergehenden Ansprüche, **dadurch gekennzeichnet, dass** die Längsreflektoren (17) zur gezielten Ausleuchtung des Beleuchtungsgebietes (11) in Querrichtung ausgerichtet sind.

8. Beleuchtungssystem nach einem der vorhergehenden Ansprüche, **dadurch gekennzeichnet, dass** die Längsreflektoren (17) zur homogenen oder inhomogenen Ausleuchtung des Beleuchtungsgebietes (11) in Längsrichtung ausgerichtet sind, vorzugsweise in Längsrichtung verteilt, weiter vorzugsweise mit gleichen Abständen.

9. Beleuchtungssystem nach einem der vorhergehenden Ansprüche, **dadurch gekennzeichnet, dass** mittels der Längsreflektoren (17) eine verstärkte oder reduzierte Ausleuchtung in Bereichen des Beleuchtungsgebietes (11) vorgesehen ist.

10. Beleuchtungssystem nach einem der vorhergehenden Ansprüche, **dadurch gekennzeichnet, dass** eine verstärkte oder reduzierte Ausleuchtung des Randbereich des Beleuchtungsgebietes (11) vorgesehen ist, insbesondere als Randüberhöhung, vorzugsweise des Randbereich an den Querseiten und/oder Längsseiten.

11. Beleuchtungssystem nach einem der vorhergehenden Ansprüche, **dadurch gekennzeichnet, dass** die Längsreflektoren (17) lediglich in Teilbereichen der Längserstreckung der Lichtquelle (13) angeordnet sind, insbesondere zur abschnittsweisen Ausleuchtung des Beleuchtungsgebietes (11).

12. Beleuchtungssystem nach einem der vorhergehenden Ansprüche, **dadurch gekennzeichnet, dass** die Lichtquelle (13) durch eine Vielzahl von Punktlichtquellen gebildet ist, wobei vorzugsweise jedem der Längsreflektoren (17) eine Punktlichtquelle, insbesondere eine Leuchtdiode (14), zugeordnet ist.

13. Beleuchtungssystem nach einem der vorhergehenden Ansprüche, **dadurch gekennzeichnet, dass** der Längsreflektor (17) und/oder der Querreflektor (20) als Linienreflektoren ausgebildet sind.

14. Beleuchtungssystem nach einem der vorhergehenden Ansprüche, **dadurch gekennzeichnet, dass** der wenigstens eine Querreflektor (20) und/oder Längsreflektor (17) rinnenförmig ist, insbesondere ein Rinnenreflektor, besonders bevorzugt eine Parabolrinne.

15. Beleuchtungssystem nach einem der vorhergehenden Ansprüche, **dadurch gekennzeichnet, dass** der wenigstens eine Längsreflektor (17) als ebener Reflektor oder als Rinnenreflektor ausgebildet ist.

## Claims

1. An illumination system for illuminating a defined illumination area (11), in particular an observation area or a camera field of view, comprising an elongated light source (13), wherein the light source (13) is preferably composed of a plurality of point light sources, in particular light-emitting diodes (14), wherein at least one transverse reflector (20) is provided for focusing the light of the light source (13) transversely to the longitudinal direction of the light source for illuminating the illumination area (11), wherein the transverse reflector extends along the light source (13), wherein, for adjusting the light intensity in the longitudinal direction of the light source, a plurality of longitudinal reflectors (17) distributed in the longitudinal direction is arranged so as to deflect the light in the longitudinal direction, **characterized in that** at least some of the longitudinal reflectors are arranged to be individually adjustable such that the light intensity can be changed in the longitudinal direction.

2. The illumination system according to claim 1, **characterized in that** the longitudinal reflectors (17) and the transverse reflector (20) are arranged one behind the other in the direction pointing to the illumination area (11).

3. The illumination system according to claim 1 or 2, **characterized in that** the longitudinal reflectors (17) extend approximately transversely to the longitudinal direction.

4. The illumination system according to any of the preceding claims, **characterized in that** the longitudinal reflectors are mounted so as to be either pivotable and/or displaceable in the longitudinal direction of the light source, so that by pivoting and/or displacing the longitudinal reflectors the light intensity can be changed in the longitudinal direction.

5. The illumination system according to any of the preceding claims, **characterized in that** first the at least one longitudinal reflector (17) and then the at least one transverse reflector (20) reflect the light.

6. The illumination system according to any of the preceding claims, **characterized in that** a plurality of longitudinal reflectors (17), more preferably at least partially or completely identical longitudinal reflectors (17), is provided for illumination in the longitudinal direction.

7. The illumination system according to any of the preceding claims, **characterized in that** the longitudinal reflectors (17) are aligned in the transverse direction for targeted illumination of the illumination area (11).

8. The illumination system according to any of the preceding claims, **characterized in that** the longitudinal reflectors (17) are aligned in the longitudinal direction for homogeneous or inhomogeneous illumination of the illumination area (11), preferably distributed in the longitudinal direction, more preferably with equal distances.

9. The illumination system according to any of the preceding claims, **characterized in that** an increased or reduced illumination is provided in areas of the illumination area (11) by means of the longitudinal reflectors (17).

10. The illumination system according to any of the preceding claims, **characterized in that** an increased or reduced illumination of the edge region of the illumination area (11) is provided, in particular as an edge elevation, preferably of the edge region on the transverse sides and/or longitudinal sides.

11. The illumination system according to any of the preceding claims, **characterized in that** the longitudinal reflectors (17) are arranged only in partial areas of the longitudinal extension of the light source (13), in particular for illuminating the illumination area (11) in sections.

12. The illumination system according to any of the preceding claims, **characterized in that** the light source (13) is formed by a plurality of point light sources, and preferably each of the longitudinal reflectors (17) having a point light source, in particular a light emitting diode (14), assigned to it.

13. The illumination system according to any of the preceding claims, **characterized in that** the longitudinal reflector (17) and/or the transverse reflector (20) are designed as line reflectors.

14. The illumination system according to any of the preceding claims, **characterized in that** the at least one transverse reflector (20) and/or longitudinal reflector (17) is/are trough-shaped, in particular is/are a trough reflector, most preferably a parabolic trough.

15. The illumination system according to any of the preceding claims, **characterized in that** the at least one longitudinal reflector (17) is designed as a planar reflector or as a trough reflector.

## Revendications

1. Système d'éclairage servant à l'illumination d'un secteur d'éclairage (11) défini, en particulier d'un secteur d'observation ou d'un champ de vision de caméra, avec une source de lumière (13) allongée, sachant que la source de lumière (13) est composée de préférence d'une pluralité de sources de lumière ponctuelles, en particulier de diodes électroluminescentes (14), sachant qu'au moins un réflecteur transversal (20) servant à focaliser la lumière de la source de lumière (13) transversalement à la direction longitudinale de la source de lumière est prévu pour l'illumination du secteur d'éclairage (11), sachant que le réflecteur transversal s'étend le long de la source de lumière (13), sachant que plusieurs réflecteurs longitudinaux (17) distribués en direction longitudinale sont disposés pour le réglage de l'intensité de lumière en direction longitudinale de la source de lumière de telle sorte qu'ils dévient la lumière en direction longitudinale, **caractérisé en ce qu'au** moins quelques-uns des réflecteurs longitudinaux sont disposés de manière individuellement réglable de telle manière que l'intensité de lumière puisse être modifiée en direction longitudinale.

2. Système d'éclairage selon la revendication 1, **caractérisé en ce que** les réflecteurs longitudinaux (17) et le réflecteur transversal (20) sont disposés les uns derrière les autres en direction pointant vers le secteur d'éclairage (11).

3. Système d'éclairage selon la revendication 1 ou 2, **caractérisé en ce que** les réflecteurs longitudinaux (17) sont dirigés de manière approximativement transversale à la direction longitudinale.

4. Système d'éclairage selon l'une des revendications précédentes, **caractérisé en ce que** les réflecteurs longitudinaux sont logés soit de manière pivotante et/soit de manière translatable en direction longitudinale de la source de lumière de telle sorte que l'intensité de lumière puisse être modifiée en direction longitudinale par pivotement et/ou translation des réflecteurs longitudinaux.

5. Système d'éclairage selon l'une des revendications précédentes, **caractérisé en ce que** d'abord l'au moins un réflecteur longitudinal (17) et ensuite l'au moins un réflecteur transversal (20) reflètent la lumière.

6. Système d'éclairage selon l'une des revendications précédentes, **caractérisé en ce qu'une** pluralité de réflecteurs longitudinaux (17), en outre de préférence de réflecteurs longitudinaux (17) identiques au moins partiellement ou intégralement, sont prévus pour l'illumination en direction longitudinale.

7. Système d'éclairage selon l'une des revendications précédentes, **caractérisé en ce que** les réflecteurs longitudinaux (17) sont orientés en direction transversale pour l'illumination ciblée du secteur d'éclairage (11).

8. Système d'éclairage selon l'une des revendications précédentes, **caractérisé en ce que** les réflecteurs longitudinaux (17) sont orientés en direction longitudinale pour l'illumination homogène ou inhomogène du secteur d'éclairage (11), de préférence distribués en direction longitudinale, de manière plus préférentielle à distances égales.

9. Système d'éclairage selon l'une des revendications précédentes, **caractérisé en ce qu'**une illumination renforcée ou réduite est prévue dans des zones du secteur d'éclairage (11) moyennant les réflecteurs longitudinaux (17).

10. Système d'éclairage selon l'une des revendications précédentes, **caractérisé en ce qu'**une illumination renforcée ou réduite de la zone de bord du secteur d'éclairage (11) est prévue, en particulier comme surélévation de bord, de préférence de la zone de bord au niveau des côtés transversaux et/ou des côtés longitudinaux.

11. Système d'éclairage selon l'une des revendications précédentes, **caractérisé en ce que** les réflecteurs longitudinaux (17) sont disposés seulement dans des zones partielles de l'extension longitudinale de la source de lumière (13), en particulier pour l'illumination par sections du secteur d'éclairage (11).

12. Système d'éclairage selon l'une des revendications précédentes, **caractérisé en ce que** la source de lumière (13) est formée par une pluralité de sources de lumière ponctuelles, sachant que de préférence une source de lumière ponctuelle, en particulier une diode électroluminescente (14), est attribuée à chacun des réflecteurs longitudinaux (17).

13. Système d'éclairage selon l'une des revendications précédentes, **caractérisé en ce que** le réflecteur longitudinal (17) et/ou le réflecteur transversal (20) sont constitués comme réflecteurs linéaires.

14. Système d'éclairage selon l'une des revendications précédentes, **caractérisé en ce que** l'au moins un réflecteur transversal (20) et/ou réflecteur longitudinal (17) est en forme de gouttière, en particulier un réflecteur à gouttière, de manière particulièrement préférentielle une gouttière parabolique.

15. Système d'éclairage selon l'une des revendications précédentes, **caractérisé en ce que** l'au moins un réflecteur longitudinal (17) est constitué comme réflecteur plan ou comme réflecteur à gouttière.
